# EUROPÄISCHE PATENTSCHRIFT

(11) **EP 1 911 224 B1**
(45) Veröffentlichungstag und Bekanntmachung des Hinweises auf die Patenterteilung: **13.04.2011**
(21) Anmeldenummer: 06792478.7
(22) Anmeldetag: 04.07.2006
(51) Int. Cl.: H04L 12/56, H04L 29/06

(54) **VERFAHREN UND KOMMUNIKATIONSSYSTEM ZUR AUSWAHL EINES ÜBERTRAGUNGSMODUS FÜR EINE ÜBERMITTLUNG VON NUTZDATEN**
METHOD AND COMMUNICATION SYSTEM FOR SELECTING A TRANSMISSION MODE FOR TRANSMITTING USER DATA
PROCEDE ET SYSTEME DE COMMUNICATION POUR SELECTIONNER UN MODE DE TRANSMISSION POUR TRANSMETTRE DES DONNEES UTILES

(30) Priorität: 02.08.2005 DE 102005036298
(43) Veröffentlichungstag der Anmeldung: 16.04.2008
(73) Patentinhaber: Siemens Enterprise Communications GmbH & Co. KG, 81379 München (DE)
(72) Erfinder: FARTMANN, Alfons, 85748 Garching (DE); MESSNER, Markus, A-2362 Biedermannsdorf (AT); TOTZKE, Jürgen, 85586 Poing (DE)
(74) Vertreter: Fritzsche, Thomas
(86) Internationale Anmeldenummer: PCT/EP2006/063853
(87) Internationale Veröffentlichungsnummer: WO 2007/014821

(56) Entgegenhaltungen:
- US-B1- 6 597 702
- US-B1- 6 671 367

## Beschreibung

### Beschreibung

Verfahren und Kommunikationssystem zur Auswahl eines Übertragungsmodus' für eine Übermittlung von Nutzdaten
Zur Übermittlung von Nutzdaten in paketorientierten Netzen werden üblicherweise zwischen den Kommunikationspartnern einer Nutzdatenverbindung im Rahmen einer Signalisierung verschiedene, die Übermittlung betreffende Parameter ausgehandelt. Diese Parameter werden im Folgenden als Übertragungsmodi bezeichnet und spezifizieren z.B. einen verwendeten Codec (Codec: encoding and decoding) zum Kodieren und Dekodieren der Nutzdaten.

Die Übertragungsmodi für die Nutzdatenübermittlung werden dabei so ausgehandelt, dass eine Kommunikation zwischen den Kommunikationspartner möglich wird. Beispielsweise werden durch die Kommunikationspartner zueinander kompatible Codecs ausgewählt oder Codecs die von beiden Partnern unterstützt werden. Mit diesen kompatiblen Codecs kann eine Nutzdatenverbindung zwischen den Kommunikationspartnern aufgebaut werden, wobei die Wahl der verwendeten Codecs insbesondere einen Einfluss auf die Qualität der Nutzdatenübermittlung und auf die verwendete Bandbreite der Nutzdatenübermittlung haben kann.

In einem paketorientierten Netz können Verbindungsabschnitte jeweils unterschiedliche Bandbreiten-Ressourcen zur Verfügung stellen. Z.B. kann eine paketorientierte Sprachverbindung eines Teleworkers zu einem Endgerät in einem LAN (Local Area Network) über eine schmalbandige Telefonleitung eines öffentlichen Telefonnetzes zu einem Gateway im LAN und von dort weiter breitbandig zu dem Endgerät geleitet werden. Bei vielen Kommunikationssystemen kommt es häufig vor, dass bei Auswahl eines nicht komprimierenden Codecs eine Verbindung über den schmalbandigen Verbindungsabschnitt nicht aufgebaut werden kann, da nicht genügend Bandbreite für eine mit diesem Codec kodierte Nutzdatenverbindung zur Verfügung steht, wogegen bei Auswahl eines komprimierenden Codecs für die Nutzdatenverbindung noch genügend Bandbreite verfügbar gewesen wäre.

Oft wird für die Nutzdatenverbindung auch ein Codec ausgewählt, der hoch komprimierend ist und somit nur eine reduzierte Nutzdatenqualität liefert, obwohl das Netzwerk eine genügend hohe Bandbreite zur Verfügung stellt, die eine Verwendung eines niedrig komprimierenden Codec mit besserer Nutzdatenqualität ermöglicht hätte.

Die Auswahl der Codecs und anderer Übertragungsmodi für eine Nutzdatenübermittlung erfolgt dabei häufig durch die Endpunkte der Verbindung und ist häufig in diesen konfiguriert. Die Konfiguration - z.B. welche Codecs verwendet werden - kann hierbei netzübergreifend oder netzbereichspezifisch durchgeführt werden.

Aus dem US-Patent US 6,671,367 B1 ist ein Verfahren bekannt, bei dem eine priorisierte Liste von Vorgabewerten von einem ursprünglichen Endpunkt zu einem so genannten Media Gateway Controller übermittelt wird, diese Liste durch den Media Gateway Controller derart verändert wird, dass Elemente die durch einen zugehörigen Media Gateway nicht unterstützt werden aus der Liste entfernt werden und diese modifizierte Liste dem Media Gateway übermittelt wird.

Es ist Aufgabe der Erfindung ein Verfahren zur Auswahl eines Übertragungsmodus' für eine Übermittlung von Nutzdaten anzugeben, die es ermöglicht, bei der Auswahl dynamische und/oder statische Rahmenbedingungen des Netzwerks zu beachten, um somit eine verbesserte Auswahl zu treffen. Es ist weiterhin Aufgabe der Erfindung ein Kommunikationssystem zur Durchführung des Verfahrens anzugeben.

Gelöst wird diese Aufgabe durch ein Verfahren mit den Merkmalen nach Patentanspruch 1 sowie durch ein Kommunikationssystem nach Patentanspruch 15. Vorteilhafte Ausführungsformen und Weiterbildungen der Erfindung sind in den abhängigen Ansprüchen angegeben.

Bei dem erfindungsgemäßen Verfahren zur Auswahl eines Übertragungsmodus' für eine Übermittlung von Nutzdaten zwischen einer ersten und einer zweiten Kommunikationseinrichtung, insbesondere einer Endeinrichtung wie einem IP-Telefon (IP: Internet Protocol), einer Multimedia-Applikation oder einem so genannten Softclient mit Telefonie-Funktionen auf einem Rechner, über ein paketorientiertes Kommunikationsnetz, wird, insbesondere im Rahmen eines Verbindungsaufbaus, eine erste Liste von Übertragungsmodi der ersten Kommunikationseinrichtung und eine zweite Liste von Ubertragungsmodi der zweiten Kommunikationseinrichtung an eine Dienstgüteeinrichtung übermittelt. Eine Dienstgüte der Übermittlung ist dabei abhängig vom jeweiligen Übertragungsmodus. Ein Übertragungsmodus kann insbesondere durch einen Codec-Typ, eine Anzahl an Nutzdatenabtastwerten oder Nutzdatensegmenten pro Nutzdatenpaket, die Art und/oder das Vorhandensein der Verschlüsselung, ein verwendeter IP-Standard (zum Zeitpunkt der Patentanmeldung IP Version 4 oder IP Version 6), eine Größe von Nutzdatenpaketen und/oder eine Anzahl von Nutzdatenpaketen pro Zeiteinheit sein. Die Dienstgüteeinrichtung, die aktuell verfügbare Ubertragungsressourcen in Form von Bandbreiten in dem Kommunikationsnetzwerk abfragt, wählt anhand verfügbarer Übertragungsressourcen des Kommunikationsnetzes ein oder mehrere Übertragungsmodi aus der ersten und der zweiten Liste derart aus, dass die von den ausgewählten Übertragungsmodi abhängige Dienstgüte durch die verfügbaren Übertragungsressourcen gewährleistbar ist. Weiterhin übermittelt die Dienstgüteeinrichtung die ausgewählten Übertragungsmodi einer Verbindungssteuerung. Die Verbindungssteuerung, insbesondere ein Netzknoten oder eine aktive Koppelkomponente im Signalisierungspfad, ein Gateway, ein Gatekeeper oder auch die erste oder die zweite Kommunikationseinrichtung, veranlasst für die Kommunikationseinrichtungen eine weitere Auswahl eines Übertragungsmodus' aus den übermittelten Übertragungsmodi. Die Übermittlung der Nutzdaten, insbesondere über eine direkte Nutzdatenverbindung, zwischen den Kommunikationseinrichtungen wird mittels des durch die weitere Auswahl ausgewählten Übertragungsmodus' durchgeführt.

Als verfügbare Übertragungsressourcen können hierbei insbesondere eine Bandbreitenobergrenze von Verbindungsabschnitten der Nutzdatenverbindung, eine aktuelle Auslastung von Verbindungsabschnitten, eine statistische oder historische Auslastung von Verbindungsabschnitten unter Betrachtung des Netzwerks aufgrund von Topologie-Informationen verstanden werden. Unter Topologie-Informationen versteht man insbesondere die Struktur des Netzwerks und maximale Bandbreiten oder Kapazitätsobergrenzen jeweiliger Verbindungsabschnitte. Eine Topologie-Information kann beispielsweise auch vorgeben, die Anzahl an parallel durchführbaren Sprachverbindungen über eine schmalbandige Anschlussleitung auf einen kleinen Wert wie eins oder zwei zu limitieren oder eine Obergrenze für eine Multimedia-Applikation auf 128kbit/s vorgeben, um neben den Sprachverbindungen weitere Datenübermittlungen auf dem Netzwerk ermöglichen zu können.

Das erfindungsgemäße Kommunikationssystem zur Auswahl eines Übertragungsmodus' für eine Übermittlung von Nutzdaten zwischen einer ersten und einer zweiten Kommunikationseinrichtung über ein paketorientiertes Kommunikationsnetz, wobei eine Dienstgüte der Übermittlung abhängig vom jeweiligen Übertragungsmodus ist, umfasst eine Dienstgüteeinrichtung zum Empfangen einer ersten Liste von Übertragungsmodi der ersten Kommunikationseinrichtung und einer zweiten Liste von Übertragungsmodi der zweiten Kommunikationseinrichtung. Weiterhin ist die Dienstgüteeinrichtung zum Auswählen eines oder mehrerer Übertragungsmodi aus der ersten und der zweiten Liste vorgesehen, wobei die Auswahl anhand verfügbarer Übertragungsressourcen des Kommunikationsnetzes derart durchgeführt wird, dass die von den ausgewählten Übertragungsmodi abhängige Dienstgüte durch die verfügbaren Übertragungsressourcen gewährleistbar ist. Darüber hinaus ist die Dienstgüteeinrichtung zum Übermitteln der ausgewählten Übertragungsmodi zu einer Verbindungssteuerung vorgesehen. Das erfindungsgemäße Kommunikationssystem umfasst weiterhin die Verbindungssteuerung zum Veranlassen einer weiteren Auswahl eines Übertragungsmodus' aus den von der Dienstgüteeinrichtung übermittelten Übertragungsmodi für die Kommunikationseinrichtungen, und eine Übermittlungseinrichtung zum Übermitteln der Nutzdaten zwischen den Kommunikationseinrichtungen mittels des durch die weitere Auswahl ausgewählten Übertragungsmodus'.

Die Erfindung ist insofern vorteilhaft, als dass die Dienstgüteeinrichtung umfassende statische und dynamische Informationen des Netzwerks bei der Auswahl der Übertragungsmodi beachten kann, die der ersten oder der zweiten Kommunikationseinrichtung üblicherweise nicht zur Verfügung stehen. Dies erlaubt eine bessere, auf tatsächliche Gegebenheiten abgestimmte Auswahl der Übertragungsmodi. Weiterhin erweist sich als vorteilhaft, dass eine sonst übliche Konfiguration der Kommunikationseinrichtungen bezüglich Auswahl der Übertragungsmodi vereinfacht wird oder sogar entfallen kann. Somit erhöht sich die Flexibilität und erleichtert sich die Administrierung des Netzwerks. Ein Vorteil ist weiterhin, das Ermöglichen einer bandbreitenoptimierten Nutzdatenübermittlung, die sich dadurch auszeichnet, dass unter Beachtung einer Anforderung an die Qualität der Nutzdaten und/oder der Nutzdatenübertragung und unter Beachtung von Ressourcen-Obergrenzen eine Verwendung von Bandbreiten-Ressourcen optimiert werden kann.

Darüber hinaus ist es vorteilhaft, dass bei der Auswahl der Übertragungsmodi die Topologie des Netzwerks beachtet werden kann und somit die Übertragungsressourcen von Verbindungsabschnitten des Netzwerks berücksichtigt werden können. Hierbei besteht die Möglichkeit die Topologie des Netzwerks in unterschiedlicher Granularität abzubilden und - je nach Anforderung - Verbindungsabschnitte gesondert oder gruppiert zu verwalten und im Rahmen der Erfindung auszuwerten. So können z.B. Subnetze des Netzwerks durch die Dienstgüteeinrichtung als eine Einheit mit gleichen Übertragungsressourcen angesehen werden.

Weiterhin ist vorteilhaft, dass auf eine Überdimensionierung des Netzwerks durch Bereitstellung unverhältnismäßig großer Übertragungsressourcen verzichtet werden kann. Alternativ und/oder darüber hinaus kann mit der Dienstgüteeinrichtung eine optimierte Auslastung des Netzwerks ermöglicht werden.

Die Aufteilung der Auswahl der Übertragungsmodi in eine Vorauswahl durch die Dienstgüteeinrichtung und eine nachgelagerte Endauswahl veranlasst durch die Verbindungssteuerung, ist insofern vorteilhaft, als dass beispielsweise die Dienstgüteeinrichtung bei der Vorauswahl lediglich subnetzübergreifende Topologie-Informationen auswertet, während bei der Endauswahl subnetz-interne Kriterien ausgewertet werden. Diese Zweistufigkeit reduziert insbesondere die Komplexität der Auswertung der Auswahl der Übertragungsmodi.

Darüber hinaus ist in einer vorteilhaften Weiterbildung der Erfindung sogar ein dreistufiges Verfahren möglich, indem die Dienstgüteeinrichtung eine Vorauswahl der Übertragungsmodi durchführt, die Verbindungssteuerung selbst eine nachlagerte Auswahl der Übertragungsmodi durchführt und die endgültige Auswahl der Übertragungsmodi aber, veranlasst durch die Verbindungssteuerung, durch die Kommunikationseinrichtungen durchgeführt wird.

In einer vorteilhaften Weiterbildung der Erfindung kann bei der Auswahl der Übertragungsmodi durch die Dienstgüteeinrichtung ein übertragungsmodusspezifischer Dienstgütevergleich und/oder Bandbreitenvergleich erfolgen, wobei der Bandbreitenvergleich ein Vergleich von einer benötigten Bandbreite mit einer verfügbaren Bandbreite darstellt. Analog stellt der Dienstgütevergleich einen Vergleich von einer gewünschten Dienstgüte mit einer verfügbaren Dienstgüte dar. Basierend auf der Auswahl der Übertragungsmodi kann eine Dienstgüte- /Bandbreiten-Reservierung erfolgen.

So ein Bandbreitenvergleich oder -test kann insbesondere eine aktuell maximal verfügbare Bandbreite ermitteln und dies mit einer minimal benötigten Bandbreite vergleichen, die sich je nach möglichem Übertragungsmodus - enthalten in der ersten und der zweiten Liste - ergibt. Dies ist insofern vorteilhaft, als dass für bereits aufgebaute Verbindungen durchgeführte Bandbreiten-Reservierungen in der Dienstgüteeinrichtung gespeichert werden können und somit bei einer folgenden Bewertung und Auswahl von Übertragungsmodi verwendet werden können.

Die Bandbreiten-Reservierung kann für einen der Übertragungsmodi durchgeführt werden, die durch die Dienstgüteeinrichtung ausgewählt wurden, wobei vorzugsweise nach einem so genannten Worst-Case-Verfahren diejenige Bandbreite reserviert wird, die von den Einträgen die höchste Bandbreite erfordert. Die Bandbreiten-Reservierung kann dabei für einzelne Verbindungsabschnitte getrennt durchgeführt werden.

Vorzugsweise kann die Auswahl der Übertragungsmodi und die Bandbreitenreservierung durch die Dienstgüteeinrichtung in einer einzigen Transaktion durchgeführt werden um somit Überschneidungen mit konkurrierenden Reservierungen im Zeitfenster zwischen Übertragungsmodus-Auswahl und -Reservierung zu vermeiden. Dabei richtet die Verbindungssteuerung eine einzige Anforderung - einen so genannten Request - an die Dienstgüteeinrichtung, die sämtliche relevanten Informationen über die Übertragungsmodi der beiden Kommunikationseinrichtungen enthält. Die Dienstgüteeinrichtung antwortet mit der Liste der selektierten Übertragungsmodi.

In einer Weiterbildung der Erfindung kann der Dienstgüteeinrichtung der, bei der weiteren Auswahl ausgewählte Übertragungsmodus mitgeteilt werden. Vorzugsweise geschieht dies nach endgültiger Auswahl des Übertragungsmodus' und vor einem durchgängigen Aufbau der Nutzdatenübermittlung. Entsprechend des ausgewählten Übertragungsmodus kann die Dienstgüteeinrichtung eine Bandbreiten-Reservierung durchführen oder eine vorher durchgeführte Bandbreiten-Reservierung aktualisieren. Dies ist insofern vorteilhaft, als dass der Dienstgüteeinrichtung somit nun die genau verwendeten Bandbreiten bekannt gemacht werden und diese Werte für Auswertungen folgender Verfahrensabläufe für weitere Nutzdatenverbindungen verwendet werden können.

Vorzugsweise kann weiterhin bei Aufbau einer Nutzdatenverbindung zur Übermittlung der Nutzdaten eine Bandbreite der Nutzdatenverbindung gemäß der reservierten Bandbreite angelegt werden. Darüber hinaus können bei Beenden der Nutzdatenverbindung die angelegten Bandbreiten und die in der Dienstgüteeinrichtung reservierten Bandbreiten wieder freigegeben werden. Letzteres kann vorzugsweise durch eine Benachrichtigungsmeldung von einer der Kommunikationseinrichtungen oder der Verbindungssteuerung an die Dienstgüteeinrichtung geschehen.

In einer vorteilhaften Ausführungsform der Erfindung kann die Dienstgüteeinrichtung den einen oder die mehreren Übertragungsmodi aus der ersten und der zweiten Liste derart auswählen, dass beide Kommunikationspartner die Übertragungsmodi unterstützen.

In einer weiteren vorteilhaften Ausführungsform der Erfindung können die Übertragungsmodi einer bi-direktionalen Verbindung je Übertragungsrichtung separat ermittelt und ausgewählt werden.

Ausführungsbeispiele der Erfindung werden nachfolgend anhand der Figuren näher erklärt.

Dabei zeigen in schematischer Darstellung die
- Figuren 1-2: ein Kommunikationssystem mit zwei über Ver- bindungssteuerungen miteinander gekoppelten IP-Telefonen und
- Figur 3: eine Veranschaulichung von übermittelten Übertragungsmodi und Übertragungsressourcen eines Teilnetzwerks des Kommunikationssys- tems.

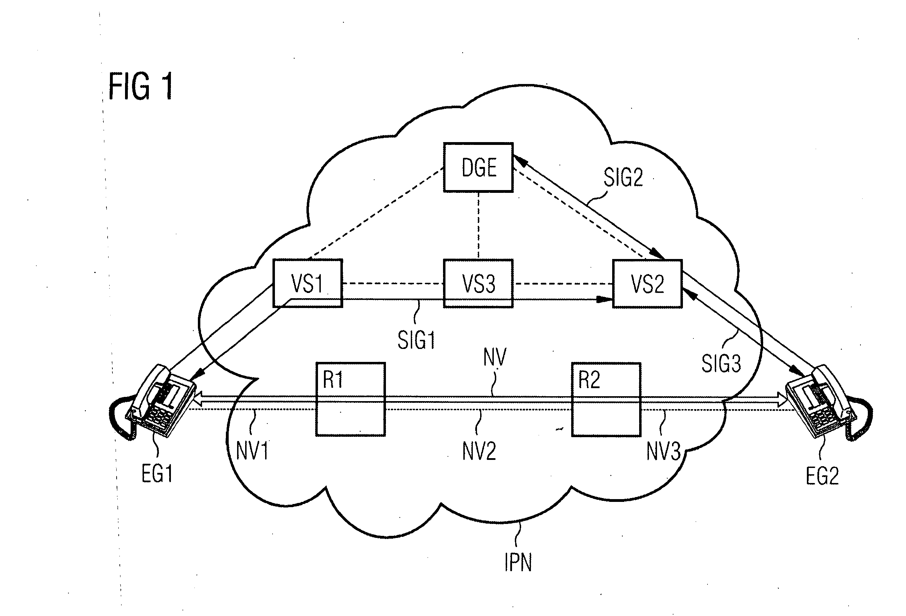

Die Figuren 1-2 zeigen in schematischer Darstellung ein Kommunikationssystem mit 2 IP-Telefonen EG1, EG2 als erste (EG1) und zweite (EG2) Kommunikationseinrichtung, drei Verbindungssteuerungen VS1, VS2, VS3 und einer Dienstgüteeinrichtung DGE. Alle diese genannten Komponenten können über ein IP-Netzwerk IPN miteinander kommunizieren, was durch gestrichelte Linien zwischen diesen Komponenten veranschaulicht ist. Das erste IP-Telefon EG1 sei dabei der ersten Verbindungssteuerung VS1 zugeordnet, das zweite IP-Telefon EG2 der zweiten Verbindungssteuerung VS2, wobei diese Zuordnung durch eine durchgehende Linie zwischen den jeweiligen Komponenten dargestellt ist und z.B. durch eine vorausgehende Konfiguration der Verbindungssteuerungen VS1, VS2 und/oder der IP-Telefone EG1, EG2 eingerichtet wurde.

Signalisierungsverbindungen SIG1, SIG2, SIG3, SIGD1, SIGD2, SIG12 sind als einfache, durchgehende Doppelpfeillinien dargestellt, während eine Nutzdatenverbindung NV als doppelte, durchgehende Doppelpfeillinie dargestellt wird. Nutzdaten seien im vorliegenden Ausführungsbeispiel Sprachdaten zwischen den beiden IP-Telefonen EG1, EG2. Ein Pfad der Nutzdatenverbindung vom ersten IP-Telefon EG1 zu einem ersten Router R1 über den ersten Pfadabschnitt NV1, über einen zweiten Pfadabschnitt NV2 zu einem zweiten Router R2 und von dort über einen dritten Pfadabschnitt NV3 zum zweiten IP-Telefon EG2 ist durch eine gepunktete Linie dargestellt. Dabei gehe ein Nutzdatenverkehr über die beiden Router R1, R2, ohne dass die beiden Router R1, R2 eine Kodierung und/oder Dekodierung der Nutzdaten durchführen. Es sei angenommen, dass lediglich in den beiden IP-Telefonen EG1, EG2 eine Kodierung und/oder Dekodierung der Nutzdaten durchgeführt wird. So eine Verbindung wird üblicherweise als direkte Nutzdatenverbindung oder direkte Payload zwischen den Kommunikationseinrichtungen bezeichnet.

Für die Übertragung der Sprachdaten, z.B. gemäß der IP-Telefonie-Technologien H.323 und SIP (Session Initiation Protocol), sind Echtzeitanforderungen zu beachten. Als Protokoll zur Übertragung der Sprachdaten wird häufig das so genannte Real-Time Transport Protocol (RTP) eingesetzt. Es dient dabei insbesondere dazu, Multimedia-Datenströme (Audio, Video, Text, etc.) über paketorientierte Netzwerke zu transportieren. Die Nutzdaten werden für den Transport kodiert - häufig verlustbehaftet aufgrund einer Kompression der Nutzdaten - und in Datenpaketen übermittelt.

Figur 1 stellt schematisch einen Verbindungsaufbau für eine Übermittlung von Nutzdaten mit Echtzeitanforderungen dar, bei dem eine Auswahl eines Übertragungsmodus' für die beiden IP-Telefone EG1, EG2 durch die Dienstgüteeinrichtung DGE vorgenommen wird.

Das erste IP-Telefon EG1 initiiert einen Ruf zum zweiten IP-Telefon EG2. Im Rahmen einer dadurch beginnenden Verbindungsaufbausignalisierung werden in der Signalisierungsverbindung SIG1 an die zweite Verbindungssteuerung VS2 die unterstützten Übertragungsmodi des ersten IP-Telefons EG1 übermittelt. Die Übertragungsmodi seien im vorliegenden Ausführungsbeispiel durch die unterstützten Codecs des ersten IP-Telefons EG1, Vorgaben für die Sprachabtastwerte pro Nutzdatenpaket und die Art der Verschlüsselung der Nutzdaten spezifiziert. Die zweite Verbindungssteuerung VS2 unterbricht nun die weitere Signalisierung zum zweiten IP-Telefon EG2 dergestalt, dass in diesem Verfahrensschritt die Signalisierung an das zweite IP-Telefon EG2 zurückgehalten wird und dem zweiten IP-Telefon EG2 keine Meldung bzgl. des Rufaufbaus übermittelt wird oder lediglich eine Meldung ohne die unterstützten Übertragungsmodi des ersten IP-Telefons EG1 übermittelt wird.

Weiterhin generiert die zweite Verbindungssteuerung VS2 eine erste Liste der vom ersten IP-Telefon EG1 unterstützten Übertragungsmodi. Zusätzlich generiert die zweite Verbindungssteuerung VS2 eine zweite Liste der vom zweiten IP-Telefon EG2 unterstützten Übertragungsmodi, wobei diese letztgenannten Übertragungsmodi der zweiten Verbindungssteuerung VS2 aufgrund einer Registrierung des zweiten IP-Telefons EG2 bei der zweiten Verbindungssteuerung VS2 bekannt gemacht wurden oder mittels Meldungsverkehr im Rahmen des bisherigen oder des aktuellen Verbindungsaufbaus abgefragt wurden.

Die zweite Verbindungssteuerung VS2 löscht nun aus den beiden Listen diejenigen Übertragungsmodi heraus, die vom Kommunikationspartner nicht unterstützt werden, und die somit bei Auswahl keine erfolgreiche Nutzdatenübertragung ermöglichen würden und von der Dienstgüteeinrichtung DGE daher ohnehin nicht ausgewählt würden.

Allgemein betrachtet kann in einer alternativen Ausgestaltung in diesem Schritt eine einzige Liste aus von den beiden IP-Telefonen EG1, EG2 unterstützten Übertragungsmodi gebildet werden, wobei im weiteren Verlauf dann nur noch diese eine Liste behandelt werden braucht.

Die beiden Listen, evtl. nach der genannten Veränderung der Listen, werden nun im Rahmen der Signalisierungsverbindung SIG2 an die Dienstgüteeinrichtung DGE übermittelt.

Die Dienstgüteeinrichtung DGE ist in Figur 1 als ein Server ausgestaltet, der unter Zuhilfenahme von Topologie-Informationen und Auslastungsinformationen ein oder mehrere Übertragungsmodi derart aus der ersten und der zweiten Liste auswählt, dass vorgegebene oder vorgebbare Kriterien erfüllt werden. Ein Kriterium ist dabei, dass eine direkte Nutzdatenübermittlung zwischen dem ersten (EG1) und dem zweiten IP-Telefon EG2 möglich wird. Ein zweites Kriterium ist, dass eine vorgegebene Übertragungsressource, z.B. eine Bandbreite auf einem Verbindungsabschnitt der Nutzdatenverbindung, nicht überschritten wird. Einfluss auf die zur Verfügung stehenden Übertragungsressourcen hat darüber hinaus die Auswahl von Codecs und Paketraten für die Nutzdatenübermittlung. Ein drittes Kriterium kann dabei sein, dass eine die Sprachqualität und eine Sprach-Verzögerung umfassende Dienstgüte gewährleistet werden kann. Ein viertes Kriterium können einschränkende Informationen von Verbindungsabschnitten sein, die z.B. die Übertragung von Daten nach einem bestimmten Protokoll auf dem jeweiligen Verbindungsabschnitt unterbinden.

Zur Auswertung dieser Kriterien stehen der Dienstgüteeinrichtung DGE Topologie-Informationen über den Aufbau des IP-Netzwerks IPN und über aktuelle und statistische Auslastungsinformationen von Verbindungsabschnitten innerhalb dieses IP-Netzwerks IPN zur Verfügung. Diese Informationen können in einer Datenbank gespeichert sein. Die Daten in der Datenbank können dabei - z.B. über XML-Konfigurationsdateien (XML: Extensible Markup Language) - konfiguriert sein, können von einem weiteren Server abgefragt werden oder können mittels Testmeldungen ermittelt werden.

Die Dienstgüteeinrichtung DGE wählt nun anhand der ersten und der zweiten Liste und verfügbarer Übertragungsressourcen des IP-Netzwerks IPN ein oder mehrere Übertragungsmodi aus der ersten und der zweiten Liste derart aus, dass die von den ausgewählten Übertragungsmodi abhängige Dienstgüte durch die verfügbaren Übertragungsressourcen gewährleistbar ist. Je nach Ausgestaltung der Dienstgüteeinrichtung DGE liefert diese nun für die zwei Listen eine gemeinsame Liste oder für die zwei Listen jeweils eine modifizierte Liste über die Signalisierungsverbindung SIG2 an die zweite Verbindungssteuerung VS2 zurück.

In einem Sonderfall (nicht dargestellt) sind die von der Dienstgüteeinrichtung DGE gebildeten Listen leer und es konnten keine Übertragungsmodi ausgewählt werden. Eine Kommunikation zwischen den IP-Telefonen EG1, EG2 ist nicht möglich. Dies wird in darauf folgenden Verfahrensschritten den IP-Telefonen EG1, EG2 mittels Signalisierungsmeldungen mitgeteilt. Dies kann üblicherweise für das zweite IP-Telefon EG2 unterbleiben, weil dieses keinen Verbindungsaufbau angeregt hat.

In einem weiteren, besonders zu betrachtenden Fall wird der zweiten Verbindungssteuerung VS2 nur ein einziger Übertragungsmodus pro Übertragungsrichtung übermittelt. Dies kann insbesondere der Fall sein, wenn lediglich ein Übertragungsmodus gefunden werden konnte oder falls die Dienstgüteeinrichtung DGE die Vorgabe hat, pro Übertragungsrichtung nur denjenigen Übertragungsmodus zurückzuliefern, der die untersuchten Kriterien am besten erfüllen kann. Dieser ausgewählte Übertragungsmodus wird dann über die Signalisierungsverbindungen SIG1 und SIG3 an die beiden IP-Telefone EG1, EG2 übermittelt, woraufhin eine Nutzdatenverbindung NV mit den selektierten Übertragungsmodi aufgebaut werden kann.

In einer allgemeineren Darstellung, kann die Dienstgüteeinrichtung DGE zwei eingeschränkte Listen mit jeweils mindestens einem Eintrag an die zweite Verbindungssteuerung VS2 übermitteln. Diese kann nun nach weiteren Kriterien eine weitere Auswahl in den Listen durchführen und somit die Listen weiter einschränken oder die Listen unverändert weiterverarbeiten.

Im Folgenden wird durch die zweite Verbindungssteuerung VS2 die bis zu diesem Verfahrensschritt zurückgehaltene Verbindungsaufbaumeldung im Rahmen der Signalisierung SIG3 an das zweite IP-Telefon EG2 weitergeleitet, wobei der Inhalt der zweiten, eingeschränkten Liste in die Signalisierungsmeldung aufgenommen wird. Somit wird dem zweiten IP-Telefon EG2 eine Liste von erlaubten oder von bevorzugt auszuwählenden Codecs übermittelt.

Mittels dieser modifizierten Signalisierung SIG3 veranlasst die zweite Verbindungssteuerung VS2, dass das gerufene, zweite IP-Telefon EG2 eine Auswahl genau eines Übertragungsmodus' je Übertragungsrichtung aus der modifizierten, zweiten Liste durchführt. Analog übermittelt die zweite Verbindungssteuerung VS2 im Rahmen der Signalisierung SIG1 die Übermittlung der eingeschränkten, ersten Liste an das erste IP-Telefon EG1 und veranlasst, dass dieses rufende, erste IP-Telefon EG1 eine Auswahl genau eines Übertragungsmodus' aus der ersten Liste durchführt.

Die beiden IP-Telefone EG1, EG2 wählen dabei den Übertragungsmodus anhand von konfigurierten Regeln aus. Nach der Auswahl der Übertragungsmodi in den beiden IP-Telefonen EG1, EG2 kann die Nutzdatenverbindung NV zwischen dem ersten IP-Telefon EG1 und dem zweiten IP-Telefon EG2 aufgebaut werden, wobei bei der Kodierung/Dekodierung und dem Senden/Empfangen der Nutzdaten die ausgewählten Übertragungsmodi durch die beiden IP-Telefone EG1, EG2 als erfindungsgemäße Übermittlungseinrichtungen verwendet werden. Insbesondere wird mit einem ausgewählten Codec kodiert und/oder dekodiert, die Pakete mit einer ausgewählten Datenpaketrate gesendet und/oder empfangen und die Pakete mit der ausgewählten Art der Verschlüsselung verschlüsselt.

Im Ausführungsbeispiel wird somit eine direkte Nutzdatenverbindung NV - geleitet über die Router R1 und R2 - zwischen den beiden IP-Telefonen EG1, EG2 ermöglicht, wobei eine vom jeweiligen Übertragungsmodus abhängige Dienstgüte der Sprach-Übermittlung derart optimiert werden kann, dass Topologie-Informationen und Auslastungsinformationen Beachtung finden.

Allgemein betrachtet kann die Dienstgüteeinrichtung DGE bei der Bearbeitung der beiden Listen ein regelbasiertes System sein oder die Kriterien anhand von Vorschriften oder Regeln, so genannte Policies, abarbeiten. Dies sind beispielsweise Restriktionen je Verbindungsabschnitt, je zu übermittelnder Nutzdaten (Sprache, Multimedia, usw.) oder je vorgegebener oder bestimmter Auslastungsschwellwerte.

Die eingeschränkten Listen, die die Dienstgüteeinrichtung DGE an die zweite Verbindungssteuerung VS2 übermittelt, können Prioritäten für die spätere endgültige Auswahl der Übertragungsmodi beinhalten. Hierbei können den einzelnen Listenelementen Prioritätsstufen zugeordnet werden oder die Reihenfolge der Elemente in der Liste spiegelt eine Priorität der Elemente wider. Auf diese Weise kann der zweiten Verbindungssteuerung VS2 mitgeteilt werden, welche der Übertragungsmodi anhand der Überprüfung durch die Dienstgüteeinrichtung DGE bevorzugt auszuwählen sind.

Die Dienstgüteeinrichtung DGE beinhaltet eine Funktionalität zur Abfrage der aktuell verfügbaren Übertragungsressourcen, insbesondere der Bandbreiten, im IP-Netzwerk IPN. Somit kann die Auswahl der Übertragungsmodi auf der aktuellen Auslastung des IP-Netzwerks IPN basieren. Weiterhin kann eine Bandbreitenreservierung durch die Dienstgüteeinrichtung DGE durchgeführt werden, die dann bei der Auswahl der Übertragungsmodi beachtet werden kann, da für einen untersuchten Übertragungsmodus eine benötigte Bandbreite für die Nutzdaten ermittelt werden kann und mit der zur Verfügung stehenden. Bandbreite verglichen werden kann. Die Bandbreitenreservierung kann dabei auf einem so genannten Worst-Case-Ansatz basieren, bei dem nach der Auswahl von mehreren Übertragungsmodi für die eingeschränkten ersten und zweiten Listen diejenige Bandbreite reserviert wird, die von allen Übertragungsmodi der Listen am größten ist. Bei der endgültigen Auswahl der Übertragungsmodi in der zweiten Verbindungssteuerung VS2 oder in den beiden IP-Telefonen EG1, EG2 kann dann diese Bandbreitenreservierung gemäß der tatsächlich genutzten Bandbreite aktualisiert werden. Weiterhin kann nach Beendigung des Anrufs ein so genannter Release Request an die Dienstgüteeinrichtung DGE zum Freigeben der reservierten Bandbreite übermittelt werden.

Das bisher protokollunabhängig dargestellte Verfahren wird im Folgenden bei einer Verwendung von H.323 oder SIP für die Signalisierung erneut erläutert. So kann bei H.323 die so genannte SETUP-Meldung im Rahmen der Signalisierungsverbindung SIG1 zur Übermittlung der vom ersten IP-Telefon EG1 unterstützten Übertragungsmodi verwendet werden, wobei die Übertragungsmodi in einer H.245-Container-Meldung übermittelt werden. Die Übertragungsmodi des gerufenen, zweiten IP-Telefons EG2 können entweder mittels einer proprietären Meldung durch die zweite Verbindungssteuerung VS2 vom zweiten IP-Telefon EG2 abgefragt werden, in der zweiten Verbindungssteuerung VS2 konfiguriert sein oder aus einer vorangegangenen H.323 Signalisierungsmeldung entnommen werden.

Bei Eingang der SETUP-Meldung bei der zweiten Verbindungssteuerung VS2 wird diese Meldung in der zweiten Verbindungssteuerung VS2 temporär zurückgehalten, die enthaltenen Übertragungsmodi werden aus der Meldung extrahiert und zur Dienstgüteeinrichtung DGE übermittelt. Nach Empfang einer Antwort von der Dienstgüteeinrichtung DGE im Rahmen der Signalisierung SIG2 mit der modifizierten ersten und zweiten Liste wird die SETUP-Meldung durch die zweite Verbindungssteuerung VS2 so verändert, dass nur die, die Kriterien erfüllenden Übertragungsmodi in der SETUP-Meldung enthalten bleiben. Diese modifizierte SETUP-Meldung wird dann an das gerufene, zweite IP-Telefon EG2 übermittelt. Alle weiteren Schritte zum Verbindungsaufbau werden dann nach üblichen Verfahren zum Verbindungsaufbau fortgesetzt.

Bei Verwendung von SIP für die Signalisierung wird eine so genannte INVITE-Meldung vom rufenden, ersten IP-Telefon EG1 an die zweite Verbindungssteuerung VS2 übermittelt, wobei die vom ersten IP-Telefon EG1 unterstützten Übertragungsmodi in einer SDP-Container-Meldung (SDP: Session Description Protocol) übermittelt werden. Vom gerufenen, zweiten IP-Telefon EG2 kann die zweite Verbindungssteuerung VS2 dessen unterstützte Übertragungsmodi mittels einer so genannten OPTIONS-Anforderung abfragen, in der zweiten Verbindungssteuerung VS2 konfiguriert sein oder aus dem so genannten SIP Precondition Handling gemäß RFC3312 entnommen werden. Die weiteren Verfahrensschritte sind dann analog zu H.323, d.h. die INVITE-Meldung wird zurückgehalten und die enthaltenen Übertragungsmodi werden mit Veränderungen, bestimmt durch die Dienstgüteeinrichtung DGE, an das gerufene, zweite IP-Telefon EG2 übermittelt.

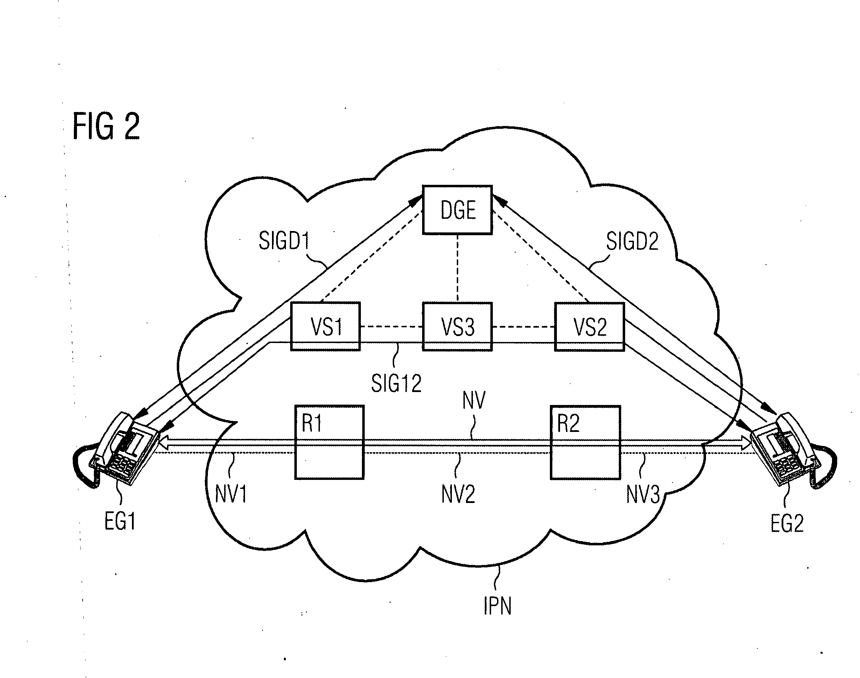

Figur 2 stellt schematisch Verfahrensschritte in einem Kommunikationssystem dar, bei dem die beiden IP-Telefone EG1, EG2 direkt die Liste ihrer unterstützten Übertragungsmodi an die Dienstgütesteuerung DGE übermitteln. In diesem Fall sei die erfindungsgemäße Verbindungssteuerung Teil des ersten und/ oder des zweiten IP-Telefons EG1, EG2. Bei Initiierung einer Sprachverbindung übermittelt das erste IP-Telefon EG1 eine Meldung SIGD1 mit seinen unterstützten Übertragungsmodi und einer Kennung des ersten IP-Telefons EG1 an die Dienstgüteeinrichtung DGE. Die Kennung erlaubt eine eindeutige Identifizierung des ersten IP-Telefons EG1, und kann z.B. die IP Adresse des ersten IP-Telefons EG1 sein. Im weiteren Verlauf der Signalisierung sendet das zweite IP-Telefon EG2 mittels der Signalisierungsmeldung SIGD2 die eigene Liste der Übertragungsmodi und die Kennung des ersten IP-Telefons EG1 an die Dienstgütesteuerung DGE, welches die Zuordnung der beiden zu verbindenden IP-Telefone EG1, EG2 anhand der Kennung durchführt.

Die Dienstgüteeinrichtung DGE ermittelt nun analog zu den vorhergehend beschriebenen Verfahrensschritten eine eingeschränkte Auswahl an Übertragungsmodi und übermittelt diese dem zweiten IP-Telefon EG2. Dieses wählt nun daraus einen Übertragungsmodus aus und übermittelt dies im Rahmen der Signalisierungsverbindung SIG12 zum ersten IP-Telefon EG1. Alternativ kann die Übertragungsmodusauswahl ausschließlich über die Signalisierungsverbindung SIGD2 erfolgen. In diesem Fall erhält das zweite IP-Telefon EG2 die Liste vom ersten IP-Telefon EG1 und kann unter Beibringung der eigenen Liste die Dienstgüteeinrichtung kontaktieren.

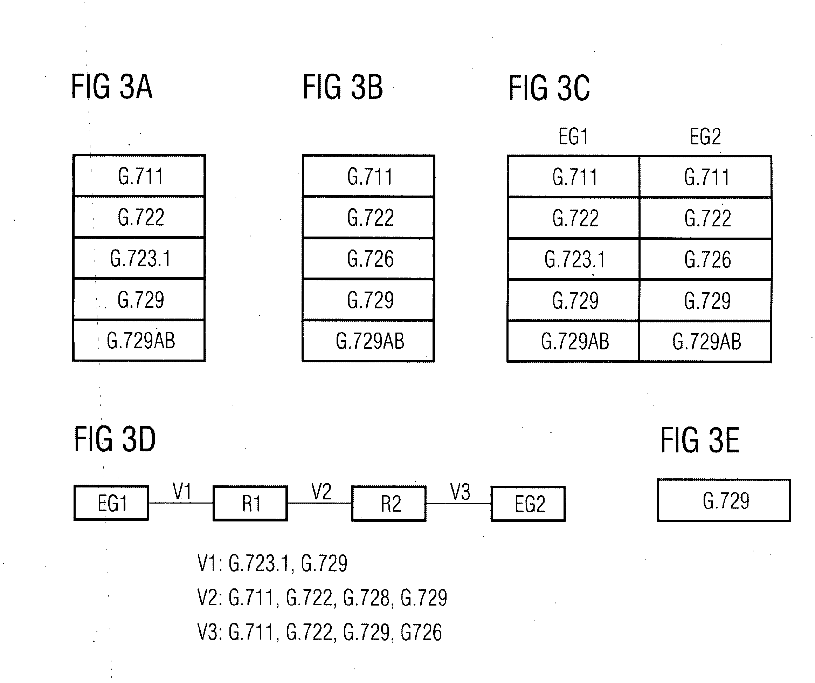

Figur 3 veranschaulicht die übermittelten Übertragungsmodi und die Übertragungsressourcen eines Teilnetzwerks anhand der Signalisierung SIG1, SIG2, SIG3 gemäß Figur 1. Eine Liste von in den Figuren 3a, 3b, 3c und 3e dargestellten Übertragungsmodi wird dabei durch ein in Abschnitte unterteiltes Rechteck dargestellt. Die Topologie eines Teilnetzwerks für die Nutzdatenverbindung zwischen dem ersten IP-Telefon EG1 und dem zweiten IP-Telefon EG2 über die Router R1 und R2 ist durch Rechtecke für die IP-Telefone EG1, EG2 und für die Router R1, R2, sowie durch durchgezogene Linien für Verbindungsabschnitte V1, V2, V3 zwischen den IP-Telefonen EG1, EG2 und Routern R1, R2 dargestellt (Figur 3d). Die verfügbaren Übertragungsressourcen sind in Figur 3d jeweils für die Verbindungsabschnitte als durch Kommata getrennte Auflistung veranschaulicht. Als Übertragungsmodi werden in Figur 3 lediglich Codecs betrachtet. Weitere Übertragungsmodi werden auf analoge Weise behandelt, sind aber aus Übersichtlichkeitsgründen nicht dargestellt. Das Beispiel bezieht sich im Weiteren nur auf die Übertragungsrichtung vom ersten IP-Telefon EG1 zum zweiten IP-Telefon EG2. Die entgegengesetzte Richtung ist analog zu sehen und ist daher nicht beschrieben.

In Figur 3a ist die erste Liste der vom ersten IP-Telefon EG1 unterstützten Codecs angegeben, die im Rahmen der Signalisierungsverbindung SIG1 an die zweite Verbindungssteuerung VS2 übermittelt wird. Die unterstützten Codecs des ersten IP-Telefons EG1 seien die Codecs G.711, G.722, G.723.1, G.729, G.729AB.

In Figur 3b ist die zweite Liste der vom zweiten IP-Telefon EG2 unterstützten Codecs angegeben, die im Rahmen der Signalisierungsverbindung SIG3 an die zweite Verbindungssteuerung VS2 übermittelt wird oder aufgrund einer Registrierung oder Konfiguration bekannt sind. Die unterstützten Codecs des zweiten IP-Telefons EG2 seien die Codecs G.711, G.722, G.726, G.729, G.729AB.

Die zweite Verbindungssteuerung übermittelt nun diese beiden Listen im Rahmen der Signalisierungsverbindung SIG2 an die Dienstgüteeinrichtung DGE. Die beiden übermittelten Listen sind in Figur 3c dargestellt und umfassen die oben genannten Codecs.

Die Dienstgüteeinrichtung DGE führt nun eine Auswahl der Übertragungsmodi durch, indem sie Topologie-Informationen des Netzwerks auswertet und Bandbreite- und Codec-Vorgaben für die Verbindungsabschnitte V1, V2, V3 beachtet. Die auszuwertende Topologie und die Vorgaben sind in Figur 3d veranschaulicht. Hier ist dargestellt, dass die aufzubauende Nutzdatenverbindung NV vom ersten IP-Telefon EG1 über den Verbindungsabschnitt V1 zum Router R1, vom Router R1 über den Verbindungsabschnitt V2 zum Router R2 und vom Router R2 über den Verbindungsabschnitt V3 an das zweite IP-Telefon EG2 geleitet wird. Aufgrund einer aktuellen Auslastung der Verbindungsabschnitte und aufgrund von Topologie-Einschränkungen - z.B. könnte der Verbindungsabschnitt V1 eine schmalbandige Telefonanschlussleitung sein und der Verbindungsabschnitt V2 eine breitbandige LAN-Verbindung, wobei aber jeweils bereits vergebene Übertragungsressourcen für zeitgleich durchgeführte Verbindungen zu beachten sind - ermittelt die Dienstgüteeinrichtung DGE, dass über den Verbindungsabschnitt V1 ein Verbindungsaufbau mit den Codecs G. 723.1 und G.729, über den Verbindungsabschnitt V2 ein Verbindungsaufbau mit den Codecs G.711, G.722, G.728 und G.729 und über den Verbindungsabschnitt V3 ein Verbindungsaufbau mit den Codecs G.711, G.722 G.729 und G.726 möglich sei. Um die Übertragung der Nutzdaten über alle drei Verbindungsabschnitte V1, V2, V3 durchzuführen, erkennt die Dienstgüteeinrichtung DGE, dass zur Sprachkodierung lediglich der Codec G.729 eine durchgängige Verbindung ermöglicht. Die Dienstgüteeinrichtung DGE verändert daraufhin die beiden Listen derart, dass eine gemeinsame Liste der durch die beiden IP-Telefone EG1, EG2 gemeinsam unterstützten Codecs gebildet wird, die lediglich der Codecs G.729 enthält. Diese gemeinsame, eingeschränkte Liste - dargestellt in Figur 3e -, die eine Auswahl der ersten und zweiten Liste enthält, wird nun über die Signalisierungsverbindung SIG2 an die zweite Verbindungssteüerung VS2 übermittelt und umfasst somit lediglich Codecs, die von beiden IP-Telefonen EG1, EG2 unterstützt werden.

Mit dem ausgewählten Codec G.729 kann nun die zweite Verbindungssteuerung VS2 die Nutzdatenübermittlung NV für die Sprachverbindung veranlassen.

Weitere, nicht dargestellte Ausführungsformen der Erfindung können vorsehen dass die zweite Verbindungssteuerung VS2 zur Bildung der ersten und/oder der zweiten Liste die Übertragungsmodi der ersten und/oder der zweiten Kommunikationseinrichtung (EG1, EG2) aus einer Verbindungsaufbau-Signalisierung - beispielsweise die Signalisierungsverbindung SIG1 - für die Übermittlung der Nutzdaten, einer vorausgegangenen Signalisierung, einer Registrierung der ersten und/oder der zweiten Kommunikationseinrichtung (EG1, EG2) bei der zweiten Verbindungssteuerung VS2, und/oder einer Konfiguration der zweiten Verbindungssteuerung VS2 ermittelt werden. Insbesondere letztgenannte Optionen ermöglichen ohne Abfrage bei der Kommunikationseinrichtung (EG1, EG2) und somit ohne Verzögerung, die an die Dienstgüteeinrichtung DGE zu schickenden Listen zu generieren.

In einer weiteren, nicht dargestellten Ausführungsform der Erfindung, können die Nutzdaten in einem Medien-Strom übermittelt werden, wobei die mit dem Medien-Strom inkompatiblen Übertragungsmodi in den an die Dienstgüteeinrichtung zu übermittelnden Listen entfallen können.

Alternativ zu dem bisher erläuterten Ausführungsbeispiel, kann der Verfahrensablauf auch derart modifiziert werden, dass, sofern es sich bei der zweiten Kommunikationseinrichtung wie im vorliegenden Ausführungsbeispiel um eine Endeinrichtung handelt, die erste Kommunikationseinrichtung die erste Liste von Übertragungsmodi mittels einer, für die zweite Kommunikationseinrichtung bestimmten Signalisierungsmeldung an die Verbiodungssteuerung übermittelt, die Verbindungssteuerung die erste Liste speichert und die Signalisierungsmeldung an die zweite Kommunikationseinrichtung übermittelt und die zweite Kommunikationseinrichtung eine im Rahmen eines Verbindungsaufbaus übliche optische und/oder akustische Signalisierung, z.B. in Form eines Klingeltons, unterdrückt. Weiterhin kann die Verbindungssteuerung die erste und die zweite Liste zur Dienstgüteeinrichtung übermitteln und die Verbindungssteuerung nach Erhalt der ausgewählten Übertragungsmodi von der Dienstgüteeinrichtung erneut eine Signalisierungsmeldung an die zweite Kommunikationseinrichtung übermitteln, wobei nur die durch die Dienstgüteeinrichtung ausgewählten Übertragungsmodi oder Teile der ausgewählten Übertragungsmodi in der Signalisierungsmeldung enthalten sein können. Der Empfang dieser Signalisierungsmeldung kann dabei bewirken, dass die zweite Kommunikationseinrichtung die optische und/oder akustische Signalisierung ausgibt.

In einem weiteren alternativen Verfahrensablauf übermittelt die erste Kommunikationseinrichtung die erste Liste von Übertragungsmodi mittels einer, für die zweite Kommunikationseinrichtung bestimmten Signalisierungsmeldung an die Verbindungssteuerung und die Verbindungssteuerung die Signalisierungsmeldung weiter an die zweite Kommunikationseinrichtung. Die zweite Kommunikationseinrichtung übermittelt weiterhin die zweite Liste von Übertragungsmodi in einer Antwortmeldung an die Verbindungssteuerung, woraufhin die Verbindungssteuerung die erste und die zweite Liste zur Dienstgüteeinrichtung übermittelt. Später, nach Erhalt der von der Dienstgüteeinrichtung ausgewählten Übertragungsmodi, übermittelt die Verbindungssteuerung der ersten und der zweiten Kommunikationseinrichtung je eine weitere Signalisierungsmeldung mit den durch die Dienstgüteeinrichtung ausgewählten Übertragungsmodi oder mit Teilen der ausgewählten Übertragungsmodi.

Die vorgestellten Verfahrensschritte können.insbesondere bei Netzprotokollen QSIG (Signalisierung am Q-Referenzpunkt) über SIP, QSIG über H.323 (Annex M.1), wobei H.323 (Annex M.1) das Tunneln von Signalisierungsprotokollen über H.323 definiert, für die Gesamtverbindung oder für die Teilverbindungen von Transitstrecken verwendet werden. Weiterhin lässt sich das Verfahren bei ISUP (ISDN User Part) über SIP, ISUP über H.323, DSS1 (Digital Subscriber Signalling System No. 1) über SIP, DSS1 über H.323, sowie für H.323 für IP-Centrex-Lösungen einsetzen.

## Patentansprüche

1. Verfahren zur Auswahl eines Übertragungsmodus' für eine Übermittlung von Nutzdaten zwischen einer ersten (EG1) und einer zweiten Kommunikationseinrichtung (EG2) über ein paketorientiertes Kommunikationsnetz (IPN), wobei eine Dienstgüte der Übermittlung abhängig vom jeweiligen Übertragungsmodus ist,
**dadurch gekennzeichnet, dass**
a) eine erste Liste von durch die erste Kommunikationseinrichtung (EG1) unterstützten Übertragungsmodi und eine unabhängig von der ersten Liste erstellte zweite Liste von durch die zweite Kommunikationseinrichtung (EG2) unterstützten Übertragungsmodi an eine Dienstgüteeinrichtung (DGE) übermittelt werden,
b) die Dienstgüteeinrichtung (DGE)
- aktuell verfügbare Übertragungsressourcen in Form von Bandbreiten in dem Kommunikationsnetz (IPN) abfragt,
- anhand der aktuell verfügbaren Übertragungsressourcen ein oder mehrere Übertragungsmodi aus der ersten und der zweiten Liste derart auswählt, dass die von den ausgewählten Übertragungsmodi abhängige Dienstgüte durch die verfügbaren Übertragungsressourcen gewährleistbar ist, und
- die ausgewählten Übertragungsmodi zu einer Verbindungssteuerung (VS2) übermittelt,
c) die Verbindungssteuerung (VS2) für die Kommunikationeinrichtungen (EG1, EG2) eine weitere Auswahl eines Übertragungsmodus' aus den übermittelten Übertragungsmodi veranlasst, und
d) die Übermittlung (NV) der Nutzdaten zwischen den Kommunikationseinrichtungen (EG1, EG2) mittels des durch die weitere Auswahl ausgewählten Übertragungsmodus' durchgeführt wird.

2. Verfahren nach Anspruch 1, bei dem
die durch die Dienstgüteeinrichtung (DGE) ausgewählten Übertragungsmodi lediglich Übertragungsmodi umfassen, die von beiden Kommunikationseinrichtungen (EG1, EG2) unterstützt werden.

3. Verfahren nach einem der vorhergehenden Ansprüche, bei dem für die zu übermittelnden Listen eine Vorauswahl derart durchgeführt wird, dass die Listen lediglich Übertragungsmodi umfassen, die von beiden Kommunikationseinrichtungen (EG1, EG2) unterstützt werden und dass die erste und die zweite Liste aus den vorausgewählten Übertragungsmodi gebildet werden.

4. Verfahren nach einem der vorhergehenden Ansprüche, bei dem zur Bildung der ersten und/oder der zweiten Liste die Übertragungsmodi der ersten (EG1) und/oder der zweiten Kommunikationseinrichtung (EG2) aus
a) einer Verbindungsaufbau-Signalisierung (SIG1) für die Übermittlung (NV) der Nutzdaten,
b) einer vorausgegangenen Signalisierung,
c) einer Registrierung der ersten (EG1) und/oder der zweiten Kommunikationseinrichtung (EG2) bei der Verbindungssteuerung (VS1, VS2), und/oder
d) einer Konfiguration der Verbindungssteuerung (VS1, VS2) ermittelt werden.

5. Verfahren nach einem der vorhergehenden Ansprüche, bei dem den durch die Dienstgüteeinrichtung (DGE) ausgewählten Übertragungsmodi verschiedene Prioritätsstufen zugeordnet werden und der, die weitere Auswahl durchführenden Einrichtung (VS2, EG1, EG2) auf diese Weise eine Empfehlung für die vorzunehmende weitere Auswahl übermittelt wird.

6. Verfahren nach einem der vorhergehenden Ansprüche, bei dem im Rahmen der Auswahl der Übertragungsmodi durch die Dienstgüteeinrichtung (DGE) ein übertragungsmodusspezifischer Vergleich von einer benötigten Bandbreite mit einer verfügbaren Bandbreite und eine auf die Auswahl basierende Bandbreiten-Reservierung erfolgt.

7. Verfahren nach Anspruch 6, bei dem
der Vergleich von einer benötigten Bandbreite mit einer verfügbaren Bandbreite im Rahmen einer Rufannahmekontrolle erfolgt.

8. Verfahren nach einem der vorhergehenden Ansprüche, bei dem der Dienstgüteeinrichtung (DGE) der, bei der weiteren Auswahl ausgewählte Übertragungsmodus mitgeteilt wird, und die Dienstgüteeinrichtung (DGE) entsprechend dieses ausgewählten Übertragungsmodus eine Bandbreiten-Reservierung durchführt oder eine vorher durchgeführte Bandbreiten-Reservierung aktualisiert.

9. Verfahren nach einem der vorhergehenden Ansprüche, bei dem
a) die erste Kommunikationseinrichtung (EG1) die erste Liste von Übertragungsmodi mittels einer, für die zweite Kommunikationseinrichtung (EG2) bestimmten Signalisierungsmeldung (SIG1) an die Verbindungssteuerung (VS2) übermittelt,
b) die Verbindungssteuerung (VS2) ein Weiterleiten der Signalisierungsmeldung (SIG1) verzögert und währenddessen die erste und die zweite Liste zur Dienstgüteeinrichzung (DGE) übermittelt (SIG2),
c) die Verbindungssteuerung (VS2) nach Erhalt der von der Dienstgüteeinrichtung (DGE) ausgewählten Übertragungsmodi die Signalisierungsmeldung (SIG1) derart modifiziert, dass die Übertragungsmodi der Signalisierungsmeldung (SIG1) durch die von der Diens-güteeinrichtung (DGE) ausgewählten Übertragungsmodi oder Teile der ausgewählten Übertragungsmodi ersetzt werden und
d) diese modifizierte Signalisierungsmeldung (SIG3) an die zweite Kommunikationseinrichtung (EG2) übermittelt wird.

10. Verfahren nach einem der vorhergehenden Ansprüche, bei dem die verfügbaren Übertragungsressourcen eine statistische oder historische Auslastung von Verbindungsabschnitten (NV1, NV2, NV3) unter Betrachtung des Kommunikationsnetzes (IPN) aufgrund von Topologie-Informationen zur Berücksichtigung der Übertragungsressourcen von Verbindungsabschnitten (NV1, NV2, NV3) des Kommunikationsnetzes (IPN) umfassen.

11. Verfahren nach Anspruch 10, bei dem
eine Topologie des Netzwerks in unterschiedlicher Granularität abgebildet wird und Verbindungsabschnitte (NV1, NV2, NV3) gesondert oder gruppiert verwaltet werden.

12. Verfahren nach einem der vorhergehenden Ansprüche, bei dem durchgeführte Bandbreiten-Reservierungen für bereits aufgebaute Verbindungen (NV) im Kommunikationsnetz (IPN) in der Dienstgüteeinrichtung (DGE) gespeichert werden zur Verwendung bei einer folgenden Bewertung und Auswahl der Übertragungsmodi.

13. Verfahren nach einem der vorhergehenden Ansprüche, bei dem basierend auf der Auswahl der Übertragungsmodi eine Bandbreiten-Reservierung durch die Dienstgüteeinrichtung (DGE) für einzeln Verbindungsabschnitte (NV1, NV2, NV3) des Kommunikationsnetzes (IPN) durchgeführt wird.

14. Verfahren nach einem der vorhergehenden Ansprüche, bei dem die Auswahl der Übertragungsmodi und eine Bandbreitenreservierung durch die Dienstgüteeinrichtung (DGE) in einer einzigen Transaktion durchgeführt werden zur Vermeidung von Überschneidungen mit konkurrierenden Reservierungen im Zeitfenster zwischen Übertragungsmodus-Auswahl und -Reservierung.

15. Kommunikationssystem zur Auswahl eines Übertragungsmodus' für eine Übermittlung (NV) von Nutzdaten zwischen einer ersten (EG1) und einer zweiten Kommunikationseinrichtung (EG2) über ein paketorientiertes Kommunikationsnetz (IPN), wobei eine Dienstgüte der Übermittlung abhängig vom jeweiligen Übertragungsmodus ist, aufweisen und **gekennzeichnet durch**
a) eine Dienstgüteeinrichtung (DGE), die derart eingerichtet ist, dass
- eine erste Liste von **durch** die erste Kommunikationseinrichtung (EG1) unterstützten Übertragungsmodi und eine unabhängig von der ersten Liste erstellte zweite Liste von **durch** die zweite Kommunikationseinrichtung (EG2) unterstützten Übertragungsmodi empfangbar (SIG2) sind,
- aktuell verfügbare Übertragungsressourcen in Form von Bandbreiten in dem Kommunikationsnetz (IPN) abfragbar sind,
- eine oder mehrere Übertragungsmodi aus der ersten und der zweiten Liste anhand der aktuell verfügbaren Übertragungsressourcen derart auswählbar sind, dass die von den ausgewählten Übertragungsmodi abhängige Dienstgüte **durch** die verfügbaren Übertragungsressourcen gewährleistbar ist und
- die ausgewählten Übertragungsmodi zu einer Verbindungssteuerung (VS2) übermittelbar (SIG2) sind,
b) die Verbindungssteuerung (VS2), die derart eingerichtet ist, dass eine weitere Auswahl eines Übertragungsmodus' aus den von der Dienstgüteeinrichtung (DGE) übermittelten Übertragungsmodi für die Kommunikationseinrichtungen (EG1, EG2) veranlassbar ist, und
c) eine Übermittlungseinrichtung, die derart eingerichtet ist, dass die Nutzdaten zwischen den Kommunikationseinrichtungen (EG1, EG2) mittels des **durch** die weitere Auswahl ausgewählten Übertragungsmodus' übermittelbar (NV) sind.

## Claims

1. Procedure for the selection of a transmission mode of useful data between a first (EG1) and a second communication device (EG2) via a packet-oriented communication network (IPN), whereby the quality of service of the transmission depends on the relevant transmission mode, **characterised by**:
a) a first list of transmission modes supported by the first communication device (EG1) and a second list, created independently of the first list, of transmission modes supported by the second communication device (EG2) being transmitted to a quality-of-service device (DGE),
b) the quality-of-service device (DGE)
- querying currently available transmission resources in the form of bandwidths in the communication network (IPN),
- selecting one or more transmission modes from the first and the second lists, based on currently available transmission resources, in such a way that the quality of service, which depends on the selected transmission modes, will be assured by the available transmission resources, and
- transmitting the selected transmission modes to a connection controller (VS2),
c) the connection controller (VS2) for the communication devices (EG1, EG2) initiating a further selection of a transmission mode from the transmitted transmission modes, and
d) the transmission (NV) of useful data between the communication devices (EG1, EG2) being performed by means of the transmission mode selected in the extended selection.

2. Procedure according to Claim 1, whereby the selected transmission modes, which were selected by the quality-of-service device (DGE) only comprise transmission modes, which are supported by both communication devices (EG1, EG2).

3. Procedure according to one of the preceding claims, whereby a pre-selection is performed of the lists, which must be transmitted, in such a way that the lists only comprise transmission modes, which are supported by both communication devices (EG1, EG2) and that the first and the second lists are compiled from the selected transmission modes.

4. Procedure according to one of the preceding claims, whereby for the formation of a first and/or second list the transmission modes of the first and/or the second communication device (EG1, EG2) are determined from:
a) a connection set-up signalling (SIG1) for the transmission (NV) of the useful data,
b) a preceding signalling,
c) a registration of the first (EG1) and/or the second communication device (EG2) at the connection controller (VS1, VS2), and/or
d) a configuration of the connection controller (VS1, VS2).

5. Procedure according to one of the preceding claims, whereby different priority levels are assigned to the transmission modes selected by the quality-of-service device (DGE) and whereby recommendations regarding the further selection are transmitted to the devices (VS2, EG1, SG2), which perform the further selection.

6. Procedure according to one of the preceding claims, whereby a transmission-mode-specific comparison of a required bandwidth to an available bandwidth and a bandwidth reservation based on the selection is performed within the framework of the selection of the transmission modes by the quality-of-service device (DGE).

7. Procedure according to Claim 6, whereby the comparison of a required bandwidth to an available bandwidth is performed within the framework of a call acceptance verification.

8. Procedure according to one of the preceding claims, whereby the transmission mode, which was selected during the extended selection, is communicated to the quality-of-service device (DGE) and the quality-of-service device (DGE) performs a bandwidth reservation according to this selected transmission mode or updates a previously performed bandwidth reservation.

9. Procedure according to one of the preceding claims, whereby:
a) the first communication device (EG1) transmits the first list of transmission modes to the connection controller (VS2) by means of a signalling message (SIG1), which is intended for the second communication device (EG2),
b) the connection controller (VS2) delays forwarding of the signalling message (SIG1), while it transmits the first and the second lists (SIG2) to the quality-of-service device (DGE),
c) the connection controller (VS2) modifies the signalling message (SIG1) after receipt of the transmission modes from the quality-of-service device (DGE) in such a way that the transmission modes of the signalling message (SIG1) are replaced by the transmission modes, which are selected by the quality-of-service device (DGE) or by parts of the selected transmission modes, and
d) this modified signalling message (SIG3) is transmitted to the second communication device (EG2).

10. Procedure according to one of the preceding claims, whereby the available transmission resources comprise a statistical or historical utilisation of connection sections (NV1, NV2, NV3), taking into consideration the communication network (IPN) based on topology information for taking into consideration the transmission resources of connection sections (NV1, NV2, NV3) of the communication network (IPN).

11. Procedure according to Claim 10, whereby a topology of the network is designed with differing granularity and connection sections (NV1, NV2, NV3) are managed separately or in groups.

12. Procedure according to one of the preceding claims, whereby performed bandwidth reservations for already set up connections (NV) in the communication network (IPN) are saved in the quality-of-service device (DGE) for use during a subsequent evaluation and selection of the transmission modes.

13. Procedure according to one of the preceding claims, whereby a bandwidth reservation is performed by the quality-of-service device (DGE) for individual connection sections (NV1, NV2, NV3) of the communication network (IPN), based on the selection of the transmission modes.

14. Procedure according to one of the preceding claims, whereby the selection of transmission modes and bandwidth reservation is performed by the quality-of-service device (DGE) in a single transaction in order to prevent overlapping with competing reservations in the time frame between selection and reservation of the transmission mode.

15. Communication system for the selection of a transmission mode for a transmission (NV) of useful data between a first (EG1) and a second communication device (EG2) via a packet-oriented communication network (IPN), whereby the quality of service of the transmission depends on the relevant transmission mode, showing and **characterised by**:
a) a quality-of-service device (DGE) being arranged in such a way that:
- a first list of transmission modes supported by the first communication device (EG1) and a second list, created independently of the first list, of transmission modes supported by the second communication device (EG2), is receivable (SIG2),
- currently available transmission resources in the form of bandwidths in the communication network (IPN) can be queried,
- one or more transmission modes from the first and the second lists, based on currently available transmission resources are selectable in such a way that the quality of service, which depends on the selected transmission modes, can be assured by the available transmission resources, and
- the selected transmission modes can be transmitted (SIG2) to a connection controller (VS2),
b) the connection controller (VS2) being arranged in such a way that it is possible to initiate a further selection of a transmission mode from the transmission modes, which are transmitted by the quality-of-service device (DGE) for the communication devices (EG1, EG2), and
c) a transmission device being arranged in such a way that the useful data can be transmitted between the communication devices (EG1, EG2) by means of the transmission mode selected in the extended selection.

## Revendications

1. Procédé pour sélectionner un mode de transmission pour transmettre des données utiles entre une première installation de communication (EG1) et une deuxième installation de communication (EG2) par le biais d'un réseau de communication en mode commutation de paquets (IPN), une qualité de service de la transmission étant dépendante dudit mode de transmission,
**caractérisé en ce que**
a) une première liste de modes de transmission supportés par la première installation de communication (EG1) et une deuxième liste de modes de transmission supportés par la deuxième installation de communication (EG2) sont transmises à une installation de qualité de service (DGE), la deuxième liste étant créée indépendamment de la première liste,
b) l'installation de qualité de service (DGE)
- effectue une demande pour des ressources de transmission actuellement disponibles sous forme de largeurs de bande dans le réseau de communication (IPN),
- à l'aide des ressources de transmission actuellement disponibles, sélectionne un ou plusieurs modes de transmission dans les première et deuxième listes de manière telle que la qualité de service dépendante des modes de transmission sélectionnés puissent être garantie par les ressources de transmission disponibles, et
- transmet les modes de transmission sélectionnés à un dispositif de commande de liaison (VS2),
c) le dispositif de commande de liaison (VS2) effectue pour les installations de communication (EG1, EG2) une autre sélection d'un mode de transmission parmi les modes de transmission transmis, et
d) la transmission (NV) des données utiles entre les installations de communication (EG1, EG2) est effectuée au moyen du mode de transmission sélectionné par l'autre sélection.

2. Procédé selon la revendication 1, dans lequel les modes de transmission sélectionnés par l'installation de qualité de service (DGE) comprennent uniquement des modes de transmission qui sont supportés par les deux installations de communication (EG1, EG21).

3. Procédé selon l'une quelconque des revendications précédentes, dans lequel une présélection est effectuée pour les listes à transmettre de manière telle que les listes comportent uniquement des modes de transmission qui sont supportés par les deux installations de communication (EG1, EG2) et en ce que les première et deuxième listes sont formées à partir des modes de transmission présélectionnés.

4. Procédé selon l'une quelconque des revendications précédentes, dans lequel, pour la formation de la première liste et/ou de la deuxième liste, les modes de transmission de la première installation de communication (EG1) et/ou de la deuxième installation de communication (EG2) sont déterminés à partir de
a) une signalisation d'établissement de liaison (SIG1) pour la transmission (NV) des données utiles,
b) une signalisation précédente,
c) une inscription de la première installation de communication (EG1) et/ou de la deuxième installation de communication (EG2) auprès du dispositif de commande de liaison (VS1, VS2), et/ou
d) une configuration du dispositif de commande de liaison (VS1, VS2).

5. Procédé selon l'une quelconque des revendications précédentes, dans lequel différents niveaux de priorité sont attribués aux modes de transmission sélectionnés par l'installation de qualité de service (DGE) et une recommandation pour l'autre sélection à réaliser est transmise de cette façon à l'installation effectuant l'autre sélection (VS2, EG1, EG2).

6. Procédé selon l'une quelconque des revendications précédentes, dans lequel, dans le cadre de la sélection des modes de transmission, l'installation de qualité de service (DGE) effectue une comparaison, spécifique au mode de transmission, d'une largeur de bande nécessaire avec une largeur de bande disponible ainsi qu'une réservation de largeurs de bande basée sur la sélection.

7. Procédé selon la revendication 6, dans lequel la comparaison d'une largeur de bande nécessaire avec une largeur de bande disponible a lieu dans le cadre d'un contrôle d'acceptation d'appel.

8. Procédé selon l'une quelconque des revendications précédentes, dans lequel le mode de transmission sélectionné lors de l'autre sélection est transmis à l'installation de qualité de service (DGE) et l'installation de qualité de service (DGE) effectue une réservation de largeurs de bande en fonction de ce mode de transmission sélectionné ou met à jour une réservation de largeurs de bande effectuée auparavant.

9. Procédé selon l'une quelconque des revendications précédentes, dans lequel
a) la première installation de communication (EGI) transmet au dispositif de commande de liaison (VS2) la première liste de modes de transmission au moyen d'un message de signalisation (SIG1) destiné à la deuxième installation de communication (EG2),
b) le dispositif de commande de liaison (VS2) retarde un acheminement du message de signalisation (SIG1) et, pendant ce temps, transmet (SIG2) la première et la deuxième liste à l'installation de qualité de service (DGE),
c) après la réception des modes de transmission sélectionnés par l'installation de qualité de service (DGE), le dispositif de commande de liaison (VS2) modifie le message de signalisation (SIG1) de manière telle que les modes de transmission du message de signalisation (SIG1) soient remplacés par les modes de transmission sélectionnés par l'installation de qualité de service (DGE) ou par des parties des modes de transmission sélectionnés et
d) ce message de signalisation modifié (SIG3) est transmis à la deuxième installation de communication (EG2).

10. Procédé selon l'une quelconque des revendications précédentes, dans lequel les ressources de transmission disponibles comportent une charge de travail statistique ou historique des segments de liaison (NV1, NV2, NV3) eu égard le réseau de communication (IPN) en raison d'informations de topologie afin de tenir compte des ressources de transmission des segments de liaison (NV1, NV2, NV3) du réseau de communication (IPN).

11. Procédé selon la revendication 10, dans lequel une topologie du réseau est reproduite avec une granularité différente et des segments de liaison (NV1, NV2, NV3) sont gérés séparément ou par groupe.

12. Procédé selon l'une quelconque des revendications précédentes, dans lequel des réservations de largeurs de bande effectuées pour des liaisons déjà établies (NV) dans le réseau de communication (IPN) sont enregistrées dans l'installation de qualité de service (DGE) afin d'être employées pour évaluer et sélectionner par la suite les modes de transmission.

13. Procédé selon l'une quelconque des revendications précédentes, dans lequel, sur la base de la sélection des modes de transmission, une réservation de largeurs de bande est effectuée par l'installation de qualité de service (DGE) pour différents segments de liaison (NV1, NV2, NV3) du réseau de communication (IPN).

14. Procédé selon l'une quelconque des revendications précédentes, dans lequel la sélection des modes de transmission et une réservation de largeurs de bande sont effectuées par l'installation de qualité de service (DGE) au cours d'une seule transaction afin d'éviter des recoupements de réservation se concurrençant dans la fenêtre de temps entre la sélection et la réservation des modes de transmission.

15. Système de communication permettant de sélectionner un mode de transmission pour une transmission (NV) de données utiles entre une première installation de communication (EG1) et une deuxième installation de communication (EG2) par le biais d'un réseau de communication en mode commutation de paquets (IPN), une qualité de service de la transmission étant dépendante dudit mode de transmission, comportant et étant **caractérisé par**
a) une installation de qualité de service (DGE) qui est conçue de manière telle que
- une première liste de modes de transmission supportés par la première installation de communication (EG1) et une deuxième liste, créée indépendamment de la première liste, de modes de transmission supportés par la deuxième installation de communication (EG2) puissent être reçues (SIG2),
- des ressources de transmission disponibles sous forme de largeurs de bande dans le réseau de communication (IPN) puissent être demandées,
- un ou plusieurs modes de transmission provenant de la première et de la deuxième liste puissent être sélectionnés à l'aide des ressources de transmission actuellement disponibles d'une manière telle que la qualité de service dépendante des modes de transmission sélectionnés puisse être garantie par les ressources de transmission disponibles et
- les modes de transmission sélectionnés puissent être transmis (SIG2) à un dispositif de commande de liaison (VS2),
b) le dispositif de commande de liaison (VS2) qui est conçu de manière telle qu'une autre sélection d'un mode de transmission parmi les modes de transmission transmis par l'installation de qualité de service (DGE) puisse être ordonnée pour les installations de communication (EG1, EG2), et
c) une installation de transmission qui est conçue de manière de telle que les données utiles puissent être transmises entre les installations de communication (EG1, EG2) au moyen du mode de transmission sélectionné par l'autre sélection (NV).
